# EUROPEAN PATENT SPECIFICATION

(11) **EP 3 437 472 B1**
(45) Date of publication and mention of the grant of the patent: **10.05.2023**
(21) Application number: 17766534.6
(22) Date of filing: 09.03.2017
(51) Int. Cl.: A01N 37/42, A01N 25/02, A01P 17/00

(54) **THE USE OF AN AGENT FOR CONTROLLING THRIPS**
DIE VERWENDUNG EINES MITTELS ZUR BEKÄMPFUNG VON THRIPSEN
L'UTILISATION D'UN AGENT DE LUTTE CONTRE LES THRIPS

(30) Priority: 14.03.2016 JP 2016050279
(43) Date of publication of application: 06.02.2019
(73) Proprietor: Riken, Wako-shi, Saitama 351-0198 (JP); National Agriculture and Food Research Organization, Tsukuba-shi, Ibaraki 305-8517 (JP); Kanagawa Prefecture, Yokohama-shi, Kanagawa 231-8588 (JP); Hiroshima Prefecture, Naka-ku Hiroshima-shi, Hiroshima 730-8511 (JP); Zeon Corporation, Tokyo 100-8246 (JP)
(72) Inventor: ABE, Hiroshi, Wako-shi Saitama 351-0198 (JP); SAKURAI, Tamito, Tsukuba-shi Ibaraki 305-8666 (JP); TOMITAKA, Yasuhiro, Tsukuba-shi Ibaraki 305-8666 (JP); TSUDA, Shinya, Tsukuba-shi Ibaraki 305-8666 (JP); OYA, Takeshi, Hiratsuka-shi Kanagawa 259-1204 (JP); KAMINISHI, Aiko, Hiratsuka-shi Kanagawa 259-1204 (JP); KAWADA, Yusuke, Hiratsuka-shi Kanagawa 259-1204 (JP); MIYOHASHI, Fumika, Hiratsuka-shi Kanagawa 259-1204 (JP); UEKUSA, Hidetoshi, Hiratsuka-shi Kanagawa 259-1204 (JP); MATSUURA, Shohei, Higashihiroshima-shi Hiroshima 739-0151 (JP); MITOMI, Masaaki, Yokohama-shi Kanagawa 222-8567 (JP); KOSHIYAMA, Masami, Tokyo 100-8246 (JP)
(74) Representative: Adam, Holger
(86) International application number: PCT/JP2017/009469
(87) International publication number: WO 2017/159533

(56) References cited:
- WO-A2-2011/117272
- JP-A- 2009 256 311
- JP-A- 2010 155 800
- JP-A- 2012 180 343
- US-A1- 2014 323 561
- US-A1- 2015 051 276
- US-A1- 2015 133 406
- US-A1- 2015 133 540
- TAKESHI OYA et al.: "Byogaichu no Shindan Dotei Oyobi Hassei Seitai no Kaimei ni Motozuku Yosatsu-Bojo Gijutsu no Kakuritsu [Forecast based on diagnosis and identification of pests and elucidation of developmental ecology - Establishment of control technology]", Kanagawa Agricultural Technology Center Shiken Kenkyu Seisekisho (Seisan Kankyo) [Kanagawa Agricultural Technology Center Test Report (Production Environment)], no. 10, 2015, pages 77-78, XP009515755,
- TAKESHI OYA et al.: "Byogaichu no Shindan Dotei Oyobi Hassei Seitai no Kaimei ni Motozuku Yosatsu ·Bojo Gijutsu no Kakuritsu [Establishment of prediction and control technologies based on diagnosis and identification of pests and ecology of their development]", Kanagawa Agricultural Technology Center Shiken Kenkyu Seisekisho (Seisan Kankyo) [Kanagawa Agricultural Technology Center Test Report (Production Environment),], 2015, pages 79-80, XP009519696,

## Description

### Technical Field

The present invention relates to the use of a thrips control agent containing prohydrojasmon at a concentration in the range of 10 ppm to 500 ppm for plants from the Brassicaceae family, the Solanaceae family, the Rosaceae family, the Curcurbitaceae family, the Fabaceae family or the Asteraceae family.

### Background Art

Thrips are minute insects. Thrips are a kind of insect pests that are difficult to control in agriculture. Damages caused by thrips and thrips-mediated tospoviruses have spread nationwide, due to interregional cultivation of a single crop, extensive distribution of seeds and seedlings, and/or the like. Further, the appearances of vegetables and fruits may be damaged due to insect damages caused by thrips. This often leads to a decline in commercial value of the vegetables and fruits. So far techniques for controlling thrips have been studied or developed. Such techniques include chemical control techniques typically including agricultural pesticide application etc., physical control techniques using insect screens, sticky traps, ultraviolet-cut films, etc., and biological control techniques with use of plant-hormone related substances, natural enemy insects, etc.

However, thrips habitually occupy a minute gap within a plant organ or between plant organs, so that it is difficult to cause an agricultural pesticide to reach the thrips. Therefore, there are scarce pesticides which exhibit a prominent effect in controlling thrips. Even if an agricultural pesticide barely exhibits a positive effect, insects resistant to the pesticide easily emerge as a result of using the pesticides more than once, or the like. In addition, in view of environmental conservation and ecosystem protection, the amount of such a highly toxic agricultural pesticide which imposes a high environmental burden is being reduced in the current trend.

The physical control techniques include, for example, a method of physically controlling invasion of thrips by providing a material such as an insect screen or a sticky trap, at an opening such as a side window or a skylight window of a cultivation facility such as a greenhouse. However, it is not possible to perfectly prevent invasion of thrips through a gap between such a material and an edge of the opening. Accordingly, the physical control techniques have a limited effect. Further, for example, placing a physical material deteriorates ventilation in a facility and consequently results in a high temperature and/or a high humidity in the facility. This is a negative effect of placing a physical material.

The biological control techniques are drawing attention because the biological control techniques may exhibit a characteristic which neither the chemical control techniques nor the physical control techniques have. For example, Patent Literature 1 discloses a thrips control agent containing, as an active ingredient, at least one selected from the group consisting of a jasmonic acid which is a plant-hormone related substance, and an ester, an amide and a salt thereof. Further, Examples of Patent Literature 1 disclose experiments of thrips control with use of methyl jasmonate. [Patent Literature 2] also discloses the use of jasmonic acid derivatives to control thrips, with methyl jasmonate being used in the examples. Prohydrojasmon has also been reported to control thrips, albeit at high concentrations, by Oya Takeshi et al in Seisan Kankyo, 2015, pages 77-78 and 79-80.

### Citation List

### [Patent Literature]

[Patent Literature 1] Japanese Patent Application Publication, Tokukai, No. 2009-256311 (Publication Date: November 5, 2009)
[Patent Literature 2] Japanese Patent Application Publication, No. 2012-180343 (Publication Date: September 20, 2012)

### Summary of Invention

### Technical Problem

However, as a result of diligent studies made by the inventors of the present application, the inventors confirmed that though methyl jasmonate described in Patent Literature 1 has a thrips control effect, methyl jasmonate causes a negative impact on plant growth. Therefore, in order to obtain a thrips control agent adapted more to practical use, there is an increasing importance of selecting the most suitable compound by re-evaluating a jasmonic acid and derivatives thereof in view of at least a thrips control ability and an impact on plant growth.

The present invention is attained in light of the above circumstances. An object of the present invention is to provide a thrips control agent which not only suppresses a negative impact on plant growth but also has a thrips control ability, and use thereof.

### Solution to Problem

A thrips control agent for use in the present invention contains prohydrojasmon as an active ingredient at a concentration in a range of 10 ppm to 500 ppm, the thrips control agent being used for a plant which belongs to family Brassicaceae, family Solanaceae, family Rosaceae, family Cucurbitaceae, family Fabaceae, or family Asteraceae.

A method of controlling thrips in accordance with an embodiment of the present invention includes the step of treating a plant with the thrips control agent, as defined above, which plant is being cultivated and belongs to family Brassicaceae, family Solanaceae, family Rosaceae, family Cucurbitaceae, family Fabaceae, or family Asteraceae.

### Advantageous Effects of Invention

An embodiment of the present invention is capable of providing a use of a thrips control agent whose negative impact on plant growth is suppressed, and corresponding method.

### Brief Description of Drawings

Fig. 1 is a chart related to Reference Example 1 and showing a result of evaluation of impacts of a methyl jasmonate (JA) treatment and a prohydrojasmon (PDJ) treatment on a plant.
Fig. 2 is a chart related to Example 1 and showing a result of evaluation of thrips control effects produced by a JA treatment and a PDJ treatment on plants.
Fig. 3 is a chart related to Example 2 and showing a result of evaluation of thrips control effects produced by a PDJ treatment on plants.
Fig. 4 is a chart related to Example 4 and showing a result of evaluation of thrips control effects produced by a PDJ treatment on plants.
Fig. 5 is a chart related to Example 5 and showing a result of evaluation of thrips control effects produced by a PDJ treatment on a plant.
Fig. 6 is a chart related to Examples 6 and 7 and showing a result of evaluation of thrips control effects produced by a PDJ treatment on a plant.

### Description of Embodiments

As a result of diligent studies made by the inventors of the present application, the inventors made it clear that even in a case where respective chemical structures of a jasmonic acid and derivatives thereof are similar to each other, the jasmonic acid and the derivatives thereof may influence plant growth and/or behavior of thrips in considerably different manners, respectively. The inventors also clarified, particularly in regard to prohydrojasmon which had been considered to be inferior to methyl jasmonate in terms of effects to be produced by thrips control agents, that while prohydrojasmon suppresses a negative impact on plant growth, prohydrojasmon has an excellent thrips control ability depending on target plants. The inventors of the present invention have accomplished the present invention based on the above findings.

The following will discuss embodiments of the present invention in details.

### [1. Thrips control agent, used in the present invention]

### (Active ingredient)

A thrips control agent used in the present invention (hereinafter, referred to as "the thrips control agent") contains prohydrojasmon (PDJ) at a concentration in the range of 10 ppm to 500 ppm. The structure of PDJ is represented by any of the formulae below. PDJ is an active ingredient for controlling thrips in the thrips control agent.

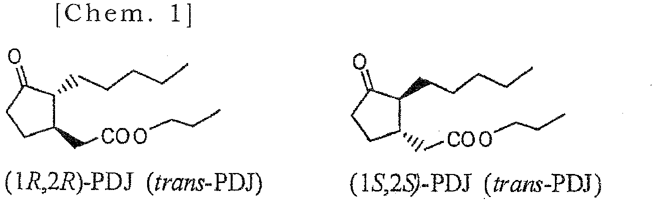

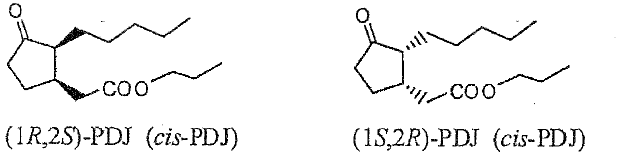

The thrips control agent, used in the present invention, may contain at least one of the above four types of PDJ enantiomers, but may also be a mixture containing two or more of the above four types of PDJ enantiomers. Typically, the thrips control agent is a mixture of the four types of PDJ enantiomers.

### (Formulation and ingredients other than PDJ)

The thrips control agent, used in the present invention, is not particularly limited in formulation. Examples of the formulation of the thrips control agent encompass liquids, wettable powders, water-dispersible granules, emulsifiable concentrates, suspensions, powders, flowables, dispersants, dusts, pastes, and aerosols. Among others, liquids are more preferable.

The thrips control agent, used in the present invention, may contain only PDJ, but the thrips control agent may further contain other active ingredient(s), a carrier(s) acceptable in agricultural pesticides, and be prepared in any of the above formulations.

The carrier may be, for example, a liquid carrier. Concrete examples of the liquid carrier encompass: water; monohydric alcohols such as methanol, ethanol, propanol, and isopropanol; polyhydric alcohols such as ethylene glycol, diethylene glycol, propylene glycol, hexylene glycol, polyethylene glycol, polypropylene glycol, and glycerin; ketones such as acetone, methyl ethyl ketone, methyl isobutyl ketone, and diisobutyl ketone; ethers such as ethyl ether, ethylene glycol monoethyl ether, and dipropyl ether; aromatic hydrocarbons such as benzene, toluene, and xylene; esters such as ethyl acetate and dimethyl adipate; lactones such as γ-butyrolactone; amides such as dimethyl formamide, diethyl formamide, and dimethyl acetamide; nitriles such as acetonitrile; and plant oils such as soy bean oil, canola oil, cotton oil, and castor oil. Each of these liquid carriers can be used solely. Alternatively, two or more of these liquid carriers can be used in combination.

Further, various surfactants which are used in formulations may be used. Such a surfactant is not particularly limited in type. Examples of the surfactant encompass nonionic surfactants, cationic surfactants, anionic surfactants, and amphoteric surfactants. Among others, nonionic surfactants are preferable. Examples of the nonionic surfactants encompass: polyoxyalkylene nonionic surfactants such as polyoxyethylene monoalkyl ether and polyoxyethylene monoaryl ether; higher fatty acid esters of polyhydric alcohols (e.g., sorbitan and sorbitol); and products each obtained by addition polymerization of an ethylene oxide with a higher fatty acid ester obtained by esterification of a polyhydric alcohol. Each of these nonionic surfactants can be used solely. Alternatively, two or more of these nonionic surfactants can be used in combination.

According to need, it is possible to use a solid carrier made of a clay mineral such as talc, or calcium carbonate; a stabilizing agent(s) for an active ingredient(s); a spreader or a sticker; and/or the like.

Further, the thrips control agent, used in the present invention, may further contain, as an active ingredient(s) other than PDJ, a repellent, an insecticide, a disinfectant and/or a plant growth regulator. The repellent (excluding PDJ) and the insecticide mentioned here may be those that target thrips or those that target an insect(s) other than thrips.

A preferred example of the thrips control agent , used in the present invention, is in a liquid formulation. liquid formulation contains preferably water, more preferably water and a monohydric alcohol, and even more preferably water, a monohydric alcohol, and a surfactant. The monohydric alcohol is preferably ethanol, propanol, or isopropanol, and more preferably propanol. In a case where the liquid formulation contains water, a monohydric alcohol, and optionally, a surfactant, a weight ratio of the water, the monohydric alcohol, and that optional surfactant are not particularly limited. The weight ratio (water : monohydric alcohol : surfactant) is, for example, 1 : 0.1 to 2 : 0 to 2, 1 : 0.5 to 1.5 : 0.5 to 1.5, 1 : 0.7 to 1.3 : 0.7 to 1.3, or 1 : 0.8 to 1.2 : 0.8 to 1.2. The liquid formulation may be diluted with water as needed so that a desired amount of the thrips control agent will be applied.

### (Control of thrips)

The "control of thrips" herein broadly means a state in which activities of thrips are suppressed in a case where a plant is treated with the thrips control agent, as compared to a case (control) where a plant is not treated with the thrips control agent. Suppression of activities of thrips may include, but is not limited to, for example, at least one of the following 1) to 6): 1) preventing thrips from coming flying to a target plant (prevention); 2) preventing thrips from staying in the target plant; 3) preventing spawning behavior of thrips at the target plant; 4) preventing insect damages caused by thrips on the target plant; 5) preventing virus infection mediated by thrips in the target plant; 6) preventing growth of larvae of thrips in the target plant. One effect of PDJ includes a thrips repelling effect.

Note that when a degree of "control of insect damage caused by thrips" is evaluated by using the above item 1) as an index, the number of thrips coming flying to the target plant is reduced, by application of the present invention, to preferably not more than 85%, more preferably not more than 80%, even more preferably not more than 60%, still even more preferably not more than 50%, and particularly preferably not more than 45% or not more than 40%, as compared to that of the control. Further, in an embodiment, preferably, the number is reduced to not more than 30%, not more than 20%, not more than 15%, not more than 10%, not more than 8%, not more than 5%, not more than 1%, or 0%, as compared to that of the control.

### (Examples of thrips)

Concrete examples of thrips which are control targets of the present invention encompass: thrips belonging to the family Thripidae (e.g., *Thrips palmi, Frankliniella occidentalis, Thrips tabaci Lindeman, Thrips simplex, Scirtothrips dorsalis,* and *Frankliniella intonsa),* and thrips belonging to the family Phlaeothripidae (e.g., *Ponticulothrips diospyrosi, Haplothrips aculeatus, Liothrips floridensis, Liothrips wasabiae Haga et Okajima, Gynaikothrips ficorum,* and *Haplothrips niger).*

### (Target plants)

Plants as targets for treatment with the thrips control agent (also referred to as "target plants") are plants which suffer from damages caused by thrips. According to the use of the invention, the target plants belong to: the family Solanaceae (e.g., tomato (*Solanum lycopersicum),* eggplant *(Solanum melongena*)*,* green pepper (bell pepper) (*Capsicum annuum L. 'grossum'),* paprika (bell pepper) *(Capsicum annuum L. 'grossum'),* chili pepper (*Capsicum annuum),* petunia (*Petunia*)*,* American black nightshade (*Solanum americanum*)*,* and potato *(Solanum tuberosum L.));* the family Fabaceae (e.g., common bean (*Phaseolus vulgaris*)*,* broad bean *(Vicia faba*)*,* azuki bean (*Vigna angularis*)*,* soybean *(Glycine max*)*,* black-eyed pea (*Vigna unguiculata*)*,* and pea *(Pisum sativum L.));* the family Asteraceae (e.g., marigold (*Tagetes*), burdock (*Arctium lappa L.*)*,* crown daisy (*Glebionis coronaria*)*,* lettuce (*Lactuca sativa*)*,* chrysanthemum *(Chrysanthemum morifolium*)*,* gerbera (*Gerbera*)*,* and cineraria *(P. × hybrida));* the family Brassicaceae (e.g., napa (*Brassica rapa var. pekinensis),* cabbage (*Brassica oleracea var. capitata),* radish (*Raphanus sativus var. longipinnatus*)*, (Turnip),* Japanese mustard spinach (*Brassica rapa var. perviridis),* broccoli *(Brassica oleracea var. italica*)*,* pak choi (*Brassica rapa var. chinensis),* and stock (*Matthiola*)); the family Cucurbitaceae (e.g., cucumber *(Cucumis sativus L.),* pumpkin (*Cucurbita*)*,* watermelon *(Citrullus lanatus*)*,* melon *(Cucumis melo.),* gourd (*Lagenaria siceraria var. gourda),* loofah (*Luffa cylindrica (L.) Roem.), and zucchini (Cucurbita pepo var. melopepo));* and the family Rosaceae (e.g., rose (*Rosa*)*,* strawberry (*Fragaria × annassa*)*,* apple *(Malus pumila*)*,* Japanese pear *(Pyrus amygdaliformis*)*,* pear *(Pyrus communis),* peach (*Amygdalus persica L.),* and nectarine (*Amygdalus persica var. nectarina*))*.*

The target plant is preferably an agricultural or horticultural plant. The target plant is preferably a herbaceous plant, and more preferably an agricultural or horticultural herbaceous plant. The herbaceous plant encompasses an annual plant, a biennial plant, or a perennial plant. The target plant is preferably a plant that is currently growing (that is, a plant that is not a seed, a plant after harvesting), and more preferably a plant being cultivated. In some cases, the target plant is preferably a plant being cultivated in a closed space. The closed space is, for example, a space inside a greenhouse, a plant factory, or the like, whose inside environment is shielded from outside air and artificially controlled. The target plant is not particularly limited in growth stage. The target plant is preferably a seedling in a seedling-raising stage, and more preferably a seedling being raised in a closed space. Further, in an embodiment, the target plant may be in a growth stage in which a leaf has been developed. In an embodiment, the target plant is preferably a plant that is within 15 days, preferably within 10 days, more preferably within 7 days, and even more preferably within 4 days from the start of development of a new leaf (e.g., a seed leaf or a true leaf).

### (Method of using the thrips control agent)

A method of treating a target plant with use of the thrips control agent is not particularly limited, except within the claimed scope. The method may be, for example, a method according to which the thrips control agent is sprayed on the target plant, a method according to which the thrips control agent is applied to a root system of the target plant so that the thrips control agent is absorbed through the root system. In an embodiment, preferably, the thrips control agent is sprayed on a target plant.

The thrips control agent is used so that the PDJ concentration will be a concentration in a range of 10 ppm to 500 ppm and preferably, approximately 20 ppm to 300 ppm. Further, when the thrips control agent is sprayed on a target plant, an amount per unit area of PDJ sprayed is 5 g/ 10 a (ares) to 100 g/10 a (ares) and preferably 10 g/ 10 a (ares) 50 g/ 10 a (ares). Further, when the thrips control agent is sprayed on a target plant, it is preferable that (i) the thrips control agent is diluted with a solvent such as water according to need so that the PDJ concentration will be a concentration in a range 10 ppm to 500 ppm and preferably, approximately 20 ppm to 300 ppm and (ii) the amount per unit area of PDJ sprayed is 5 g/ 10 a (ares) to 100 g/ 10 a (ares) and preferably 10 g/ 10 a (ares) 50 g/ 10 a (ares).

The thrips control agent, used in the present invention, may be sprayed on a target plant by overall application or local application which targets a portion(s) of a plant body of a target plant (e.g., a leaf(leaves), a bud(s), a flower(s), or a stem(s) that are a portion(portions) where it is desired to avoid thrips damages).

Further, the number of times of treating the target plant with the thrips control agent is not particularly limited. The number of times of such treatment is approximately 1 time to 5 times, more preferably approximately 3 times to 5 times, and even more preferably approximately 4 times or 5 times, before harvesting of the target plant. In an embodiment of the present invention, the number of times of such treatment before obtainment of a favorable control effect is preferably not less than 4 times and more preferably not less than 5 times. In an embodiment of the present invention, the number of times of such treatment is preferably not more than 7 times and more preferably not more than 6 times, in view of economic efficiency. In a case where the target plant is treated a plurality of number of times, a time interval(s) of such treatment is not particularly limited. In an embodiment, the time intervals are preferably in a range of 4 days to 10 days and more preferably in a range of 5 days to 7 days. In an embodiment, preferably, the thrips control agent is sprayed on a target plant not less than 4 times at time intervals in a range of 5 days to 7 days. Note that in a case where the target plant is supplied to humans or animals for edible use, a predetermined time before harvesting the target plant can be set as a period in which the thrips control agent is not used or in which use of the thrips control agent is reduced.

Preferably, the target plant is treated with the thrips control agent before thrips come flying to the target plant. However, even in a case where the target plant is treated with the thrips control agent after thrips are confirmed to have come flying to the target plant, such treatment is still effective.

### [2. Combined use with decoy plant]

### (Combined use)

The thrips control agent may be used in combination with a plant which attracts thrips (hereinafter, which may be also referred to as "decoy plant"). The decoy plant is selected from plants attractive to thrips rather than plants to be treated with the thrips control agent. Examples of the decoy plant encompass: 1) a plant which is different in kind from the target plant and favored by thrips (referred to as "favorite plants of thrips"; and 2) a plant having an increased salicylic-acid-mediated protective response system (referred to as "increased-SA plant"). Kinds of the increased-SA plant are not particularly limited. The increased-SA plant may be a plant of a kind that is the same as or different from that of the above target plant.

Concrete examples of the favorite plants of thrips encompass *Tagetes, Verbena, Trifolium, and Cucurbita pepo var. melopepo.*

For example, having undergone a predetermined treatment, the increased-SA plant has an increased salicylic-acid-mediated protective response system as compared to an untreated state of the plant for the increased-SA plant. Alternatively, the increased-SA plant has a genetic mutation which increases a salicylic-acid-mediated protective response system. The above-described predetermined treatment for producing the increased-SA plant may be at least one selected from, for example, (i) a gene modification process (for producing a genetically modified plant) which causes overexpression of a factor related to a salicylic acid pathway in a plant body, (ii) treatment with a candidate agent, such as benzothiadiazole (BTH), for increasing a salicylic-acid-mediated protective response system, and (iii) inoculation of a plant virus. In a case where the inoculation of a plant virus is to be performed as the predetermined treatment, the plant virus may be preferably selected from plant viruses belonging to the genus *Tospoviruses.* Further, the plant virus may be a wild-type virus, but in view of maintaining a decoy plant for a longer period of time, the plant virus may be preferably an attenuated variant virus which is a variant virus whose virulence is decreased as compared to a wild-type virus. It is possible to refer to the disclosure of Japanese Patent Application Publication, Tokukai, No. 2012-180343 for production and use of the increased-SA plant.

### (Thrips control kit - not forming part of the invention)

A thrips control kit, which does not form part of the invention, includes 1) the thrips control agent and 2) one of the above-described decoy plant which attracts thrips or the above-described plant virus. The thrips control kit is used for an application discussed in the column of (Combined use) above. The plant virus of the above element 2) is used for the purpose of producing a decoy plant by increasing a salicylic-acid-mediated protective response system in a plant.

The thrips control kit may further include, as needed, an instrument (e.g., a spray) for treating a plant with use of the thrips control agent of the above element 1) above and an instrument (e.g., an abrading agent, dry cotton, a stick with dry cotton) for producing a decoy plant by using the plant virus of the element 2) above. To the thrips control kit, a manual may be attached, which manual describes the application which was discussed in the column of (Combined use) above.

### [3. Recap]

An embodiment of the present invention provides any of the followings:
1) Use of a thrips control agent, wherein:
   the thrips control agent contains prohydrojasmon as an active ingredient at a concentration in a range of 10 ppm to 500 ppm,
   the thrips control agent being used for a plant which belongs to family Brassicaceae, family Solanaceae, family Rosaceae, family Cucurbitaceae, family Fabaceae, or family Asteraceae.
2) The use as set forth in 1), wherein: the plant is cabbage, cucumber, tomato, green pepper, strawberry, chrysanthemum, or crown daisy.
3) The use as set forth in 1) or 2), wherein:
   the plant is a herbaceous plant.
4) The use as set forth in any one of 1) to 3), wherein: the plant is a seedling of the plant.
5) The use as set forth in any one of 1) to 4), wherein: the plant is being cultivated in a closed space.
6) A method of controlling thrips, including the step of:
   treating a plant with a thrips control agent recited in any one of 1) to 5), which plant is being cultivated and belongs to family Brassicaceae, family Solanaceae, family Rosaceae, family Cucurbitaceae, family Fabaceae, or family Asteraceae.
7) The method as set forth in 6), wherein: the plant is treated with the thrips control agent not less than 4 times at intervals of 5 days to 7 days in the step of treating the plant with the thrips control agent.
8) The method as set forth in 6) or 7), wherein: the plant is treated with the thrips control agent within 7 days from start of development of a new leaf, in the step of treating the plant with the thrips control agent.
9) The method as set forth in any one of 6) to 8), wherein: the treating includes spraying of the thrips control agent.

The following will provide Examples to more specifically describe embodiments of the present invention. As a matter of course, the present invention is not limited to Examples provided below, but details of the present invention can be realized in various manners. Further, the present invention is not limited to the embodiments described above, and it may be varied in various ways within the scope of the appended Claims.

### [Examples]

The following will discuss in detail embodiments of the present invention, with reference to a Reference Example and Examples.

### [Reference Example 1]

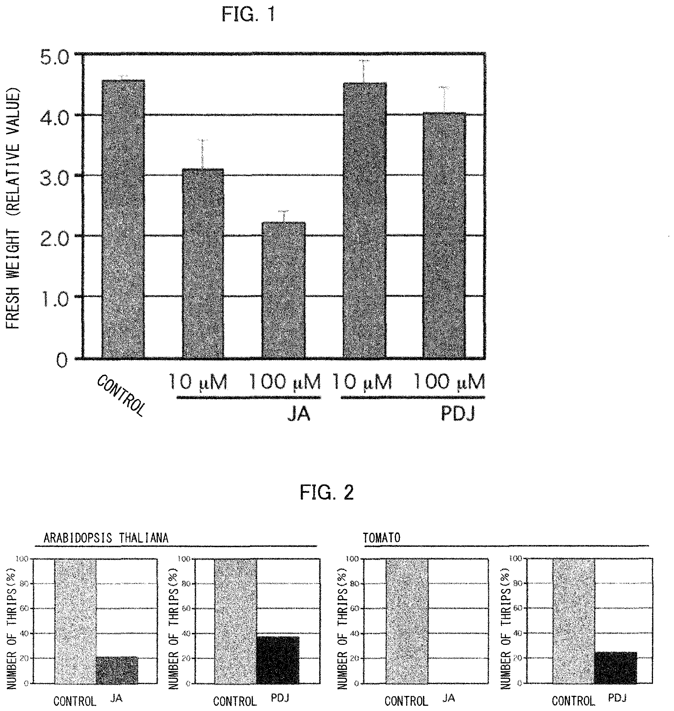

In a greenhouse whose room temperature was kept within a range of 20°C to 25°C, 15 stocks of nappa cabbage (*Brassica rapa var. pekinensis)* one week after seeding were separated into the following 5 groups: (i) a control group of 3 stocks, (ii) a group of 3 stocks to be treated with 10 µM (25 ppm) prohydrojasmon (PDJ), (iii) a group of 3 stocks to be treated with 100 µM (254 ppm) PDJ, (iv) a group of 3 stocks to be treated with 10 µM (22 ppm) methyl jasmonate (JA), and (v) a group of 3 stocks to be treated with 100 µM (224 ppm) JA. The stocks in each of the above groups subjected to treatment were given the PDJ solution or JA solution at the above-described concentration, and caused to absorb the PDJ solution or JA solution through roots of the stocks. The stocks in the control group were given only water and caused to absorb water through roots of the stocks. Two weeks after the above treatment, aerial parts of the stocks in each of the 5 groups were harvested, and fresh weights of the aerial parts were measured. Fig. 1 shows a result of this measurement. The result shows that unlike JA, PDJ hardly inhibits plant growth.

### [Example 1]

In a greenhouse whose room temperature was kept within a range of 20°C to 25°C, two plant individuals of *Arabidopsis thaliana* three weeks after seeding, which were planted in different pots, respectively, were placed apart from each other such that a distance of approximately 30 cm was provided and kept between these plant individuals. Then, 100 µM PDJ solution was directly sprayed on one of the two plant individuals by use of a spraying device. On the other one of the two plant individuals, only water was sprayed similarly. This plant individual on which only water was sprayed was a control. Two days after the above treatment, 30 female adult thrips of *Frankliniella occidentalis* were released at a middle point between the two plant individuals. Twenty-four hours after that release of *Frankliniella occidentalis,* the number of thrips on each plant individual was counted so that which one of the plant individuals the thrips had moved to was found. With use of 100 µM JA solution, a similar experiment was carried out. Further, similar experiments with use of the 100 µM PDJ solution and the 100 µM JA solution were carried out on tomato *(Solanum lycopersicum)* three weeks after seeding. Fig. 2 shows results of the experiments. This clarified that PDJ and JA can give repellency against thrips to both of *Arabidopsis thaliana* and tomato.

### [Example 2]

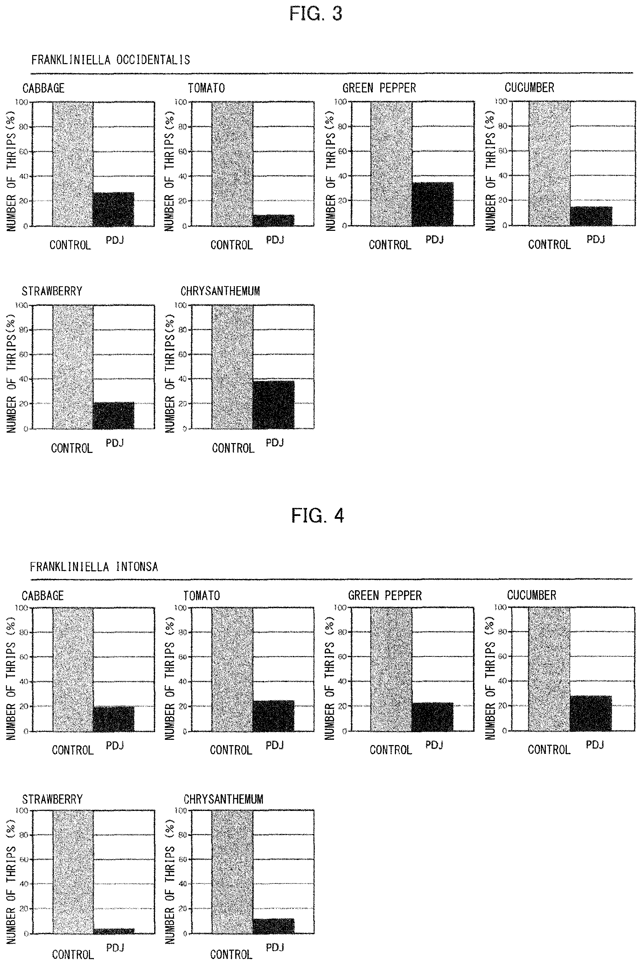

In a greenhouse whose room temperature was kept within a range of 20°C to 25°C, with regard to each of tomato (*Solanum lycopersicum* (family Solanaceae)), green pepper (bell pepper) (*Capsicum annuum L. 'grossum'* (family Solanaceae)), cabbage (*Brassica oleracea var. capitata* (family Brassicaceae)), cucumber *(Cucumis sativus L.* (family Cucurbitaceae)), strawberry (*Fragaria × annassa* (family Rosaceae)) and chrysanthemum (*Chrysanthemum morifolium* (family Asteraceae)), two plant individuals three weeks after seeding were placed apart from each other such that a distance of approximately 30 cm was provided and kept between these plant individuals. Then, 100 µM PDJ solution was sprayed on an entire aerial part of only one of the two plant individuals by use of a spraying device. On the other one of the two plant individuals, only water was sprayed by a similar method. This plant individual on which only water was sprayed was a control. Two days after the above spraying, 30 female adult thrips of *Frankliniella occidentalis* were released at a middle point between the two plant individuals. Twenty-four hours after that release of *Frankliniella occidentalis,* the number of thrips on each plant individual was counted so that which one of the plant individuals the thrips had moved to was found. Fig. 3 shows results of that count of the thrips. This clarified that treatment with PDJ can give sufficient repellency against *Frankliniella occidentalis* to all tomato (*Solanum lycopersicum* (family Solanaceae)), green pepper (bell pepper) (*Capsicum annuum L. 'grossum'* (family Solanaceae)), cabbage (*Brassica oleracea var. capitata* (family Brassicaceae)), cucumber *(Cucumis sativus L.* (family Cucurbitaceae)), strawberry (*Fragaria × annassa* (family Rosaceae)) and chrysanthemum (*Chrysanthemum morifolium* (family Asteraceae)).

Further, the target plant was changed to crown daisy *(Glebionis coronaria)* of the family Asteraceae, and repellency against thrips was studied similarly. As a result, it was confirmed that repellency against thrips is given to crown daisy *(Glebionis coronaria)* of the family Asteraceae.

### [Example 3]

In a greenhouse whose room temperature was kept within a range of 20°C to 25°C, with regard to each of green pepper (bell pepper) (*Capsicum annuum L. 'grossum'* (family Solanaceae)) and cabbage (*Brassica oleracea var. capitata* (family Brassicaceae)), two plant individuals three weeks after seeding were placed apart from each other such that a distance of approximately 30 cm was provided and kept between these plant individuals. Then, 100 µM PDJ was sprayed on an entire aerial part of only one of the two plant individuals by use of a spraying device. On the other one of the two plant individuals, only water was sprayed by a similar method. This plant individual on which only water was sprayed was a control. Two days after the above spraying, 30 female adult thrips of *Thrips tabaci Lindeman* were released at a middle point between the two plant individuals. Twenty-four hours later, the number of *Thrips tabaci Lindeman* on each plant individual was counted so that which one of the plant individuals the thrips had moved to was found. As a result, with regard to the green pepper (bell pepper) *(Capsicum annuum L. 'grossum'),* an attachment rate of *Thrips tabaci Lindeman* was approximately 40% relative to that of the control. Meanwhile, with regard to cabbage (*Brassica oleracea var. capitata),* an attachment rate of *Thrips tabaci Lindeman* was approximately 40% relative to that of the control.

### [Example 4]

In a greenhouse whose room temperature was kept within a range of 20°C to 25°C, with regard to each of tomato *(Solanum lycopersicum* (family Solanaceae)), green pepper (bell pepper) *(Capsicum annuum L. 'grossum'* (family Solanaceae)), cabbage (*Brassica oleracea var. capitata* (family Brassicaceae)), cucumber *(Cucumis sativus L.* (family Cucurbitaceae)), strawberry (*Fragaria × annassa* (family Rosaceae)) and chrysanthemum (*Chrysanthemum morifolium* (family Asteraceae)), two plant individuals three weeks after seeding were placed apart from each other such that a distance of approximately 30 cm was provided and kept between these plant individuals. Then, 100 µM PDJ solution was sprayed on an entire aerial part of only one of the two plant individuals by use of a spraying device. On the other one of the two plant individuals, only water was sprayed by a similar method. This plant individual on which only water was sprayed was a control. Two days after the above spraying, 30 female adult thrips of *Frankliniella intonsa* were released at a middle point between the two plant individuals. Twenty-four hours after that release of *Frankliniella intonsa,* the number of thrips on each plant individual was counted so that which one of the plant individuals the thrips had moved to was found. Fig. 4 shows results of that count of the thrips. This clarified that treatment with PDJ can give sufficient repellency against *Frankliniella intonsa* to all tomato *(Solanum lycopersicum* (family Solanaceae)), green pepper (bell pepper) *(Capsicum annuum L. 'grossum'* (family Solanaceae)), cabbage (*Brassica oleracea var. capitata* (family Brassicaceae)), cucumber *(Cucumis sativus L.* (family Cucurbitaceae)), strawberry (*Fragaria × annassa* (family Rosaceae)) and chrysanthemum *(Chrysanthemum morifolium* (family Asteraceae)).

### [Example 5]

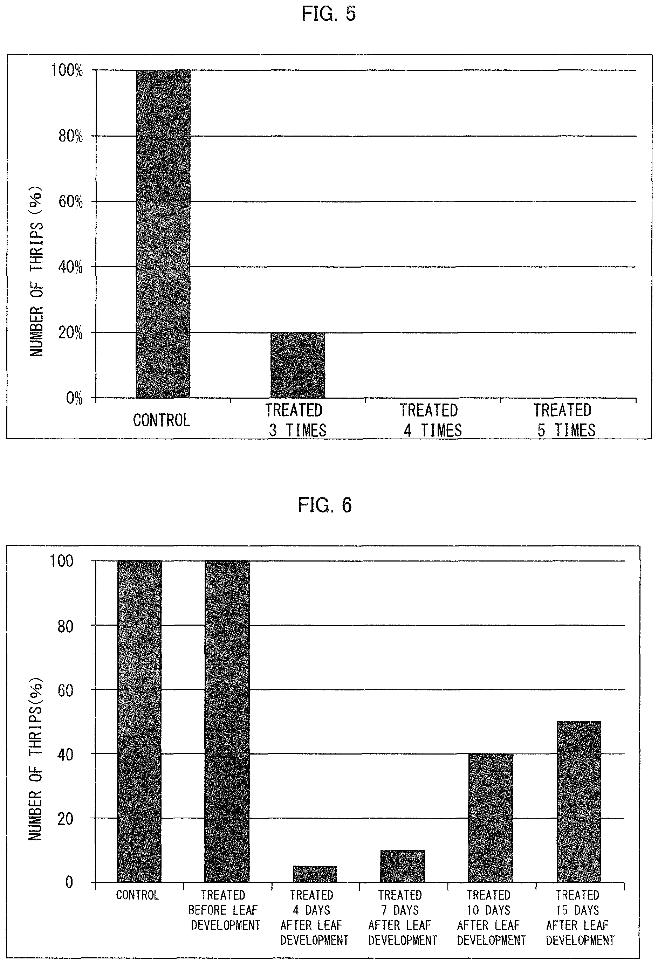

In a greenhouse whose room temperature was kept within a range of 20°C to 25°C, two plant individuals of tomato (*Solanum lycopersicum)* (approximately 1.5 months after seeding), which had developed 3 to 4 true leaves, were placed apart from each other such that a distance of approximately 30 cm was provided and kept between these plant individuals. Then, 100 µM PDJ solution was directly prayed on an entire aerial part of only one of the two plant individuals by use of a spraying device. The above spraying was carried out 3 times, 4 times or 5 times at intervals of 5 to 7 days. On the other one of the two plant individuals, only water was sprayed by a similar method. This plant individual on which only water was sprayed was a control. Four days after the last spraying, 30 female adult thrips of *Frankliniella occidentalis* were released at a middle point between the two plant individuals. Forty days after that release of *Frankliniella occidentalis,* the number of thrips on the third and higher-order true leaves was counted. Fig. 5 shows a result of that count of the thrips. In the case of the plant individual on which the PDJ solution was sprayed 3 times, the total number of thrips attached to the third and higher-order true leaves was approximately 20% relative to that of the control. In the case of the plant individual on which the PDJ solution was sprayed 4 times or 5 times, the total number of thrips attached to the third and higher-order true leaves was 0% relative to that of the control. In this way, it was clarified that in a case where spraying is carried out 4 times or 5 times at intervals of 5 days to 7 days, repellency against thrips is higher than that in a case where spraying is carried out 3 times.

### [Example 6]

In a greenhouse whose room temperature was kept within a range of 20°C to 25°C, two plant individuals of tomato (*Solanum lycopersicum*) (approximately 1.5 to 2 months after seeding), which had developed 4 true leaves, were placed apart from each other such that a distance of approximately 30 cm was provided and kept between these plant individuals. Then, 100 µM PDJ solution was sprayed on an entire aerial part of only one of the two plant individuals by use of a spraying device. On the other one of the two plant individuals, only water was sprayed by a similar method. This plant individual on which only water was sprayed was a control. The above spraying was carried out at time points 3 days, 7 days, 10 days and 15 days after the start of development of the fourth true leaf. Four days after the above spraying, 30 female adult thrips of *Frankliniella occidentalis* were released at a middle point between the two plant individuals. Six days after that release of *Frankliniella occidentalis,* the number of thrips on the fourth true leaf was counted. Fig. 6 shows a result of that count. The number of thrips attached to the fourth true leaf was approximately 5% of that of the control in the case of the spraying carried out at the time point 3 days after the start of the development of the fourth true leaf, approximately 10% of that of the control in the case of the spraying carried out at the time point 7 days after the start of the development, approximately 40% of that of the control in the case of the spraying carried out at the time point 10 days after the start of the development, and approximately 50% of that of the control in the case of the spraying carried out at the time point 15 days after the start of the development. In this way, it was clarified that in a case where the spraying was carried out within 7 days from the start of development of a new leaf of a plant, repellency against thrips given to the plant is higher than that in a case where spraying is carried out more than 7 days after the start of the development.

### [Example 7]

In a greenhouse whose room temperature was kept in a range of 20°C to 25°C, two plant individuals of tomato (*Solanum lycopersicum*) (approximately 1 to 1.5 months after seeding), which had developed 3 true leaves, were placed apart from each other such that a distance of approximately 30 cm was provided and kept between these plant individuals. Then, 100 µM PDJ solution was sprayed on an entire aerial part of only one of the two plant individuals by use of a spraying device. At this time point, the fourth true leaf was not yet developed. On the other one of the two plant individuals, only water was sprayed by a similar method. This plant individual on which only water was sprayed was a control. Four days after the above spraying, 30 female adult thrips of *Frankliniella occidentalis* were released at a middle point between the two plant individuals. Six days after that release of *Frankliniella occidentalis,* the number of thrips on the fourth true leaf was counted. Fig. 6 shows a result of that count. The number of thrips attached to the fourth true leaf was approximately 100% of that of the control. Note that the total number of thrips attached to the first to third true leaves was much smaller than that of the control.

### Industrial Applicability

The present invention is applicable to control of thrips in agriculture.

## Claims

1. Use of a thrips control agent, wherein:
the thrips control agent contains prohydrojasmon as an active ingredient at a concentration in a range of 10 ppm to 500 ppm, the thrips control agent being used for a plant which belongs to family Brassicaceae, family Solanaceae, family Rosaceae, family Cucurbitaceae, family Fabaceae, or family Asteraceae.

2. The use as set forth in claim 1, wherein:
the plant is cabbage, cucumber, tomato, green pepper, strawberry, chrysanthemum, or crown daisy.

3. The use as set forth in claim 1 or 2, wherein:
the plant is a herbaceous plant.

4. The use as set forth in any one of claims 1 to 3, wherein:
the plant is a seedling of the plant.

5. The use as set forth in any one of claims 1 to 4, wherein:
the plant is being cultivated in a closed space.

6. A method of controlling thrips, comprising the step of:
treating a plant with a thrips control agent recited in any one of claims 1 to 5, which plant is being cultivated and belongs to family Brassicaceae, family Solanaceae, family Rosaceae, family Cucurbitaceae, family Fabaceae, or family Asteraceae.

7. The method as set forth in claim 6, wherein:
the plant is treated with the thrips control agent not less than 4 times at intervals of 5 days to 7 days in the step of treating the plant with the thrips control agent.

8. The method as set forth in claim 6 or 7, wherein:
the plant is treated with the thrips control agent within 7 days from start of development of a new leaf, in the step of treating the plant with the thrips control agent.

9. The method as set forth in any one of claims 6 to 8, wherein:
the treating includes spraying of the thrips control agent.

## Patentansprüche

1. Verwendung eines Mittels zur Bekämpfung von Thripsen, wobei:
das Mittel zur Bekämpfung von Thripsen Prohydrojasmon als Wirkstoff in einer Konzentration im Bereich von 10 ppm bis 500 ppm enthält, wobei das Mittel zur Bekämpfung von Thripsen für eine Pflanze verwendet wird, die zur Familie der Brassicaceae, Familie der Solanaceae, Familie der Rosaceae, Familie der Cucurbitaceae, Familie der Fabaceae oder Familie der Asteraceae gehört.

2. Verwendung nach Anspruch 1, wobei:
die Pflanze Kohl, Gurke, Tomate, Paprika, Erdbeere, Chrysantheme oder Gänseblümchen ist.

3. Verwendung nach Anspruch 1 oder 2, wobei:
die Pflanze eine krautige Pflanze ist.

4. Verwendung nach einem der Ansprüche 1 bis 3, wobei:
die Pflanze ein Sämling der Pflanze ist.

5. Verwendung nach einem der Ansprüche 1 bis 4, wobei:
die Pflanze in einem geschlossenen Raum angebaut wird.

6. Verfahren zur Bekämpfung von Thripsen, das den folgenden Schritt umfasst:
Behandlung einer Pflanze mit einem in einem der Ansprüche 1 bis 5 genannten Mittel zur Bekämpfung von Thripsen, wobei die Pflanze kultiviert wird und zur Familie der Brassicaceae, der Familie der Solanaceae, der Familie der Rosaceae, der Familie der Cucurbitaceae, der Familie der Fabaceae oder der Familie der Asteraceae gehört.

7. Verfahren nach Anspruch 6, wobei:
die Pflanze im Schritt der Behandlung der Pflanze mit dem Mittel zur Bekämpfung von Thripsen mindestens viermal in Abständen von 5 bis 7 Tagen behandelt wird.

8. Verfahren nach Anspruch 6 oder 7, wobei:
die Pflanze im Schritt der Behandlung der Pflanze mit dem Mittel zur Bekämpfung von Thripsen innerhalb von 7 Tagen nach Beginn der Entwicklung eines neuen Blattes mit dem Mittel zur Bekämpfung von Thripsen behandelt wird.

9. Verfahren nach einem der Ansprüche 6 bis 8, wobei:
die Behandlung das Besprühen mit dem Mittel zur Bekämpfung von Thripsen umfasst.

## Revendications

1. Utilisation d'un agent de lutte contre les thrips, dans laquelle :
l'agent de lutte contre les thrips contient du prohydrojasmon en tant qu'ingrédient actif à une concentration comprise entre 10 ppm et 500 ppm, l'agent de lutte contre les thrips étant utilisé pour une plante appartenant à la famille des Brassicaceae, à la famille des Solanaceae, à la famille des Rosaceae, à la famille des Cucurbitaceae, à la famille des Fabaceae ou à la famille des Asteraceae.

2. Utilisation telle que décrite dans la revendication 1, dans laquelle :
la plante est un chou, un concombre, une tomate, un poivron vert, une fraise, un chrysanthème ou une marguerite.

3. Utilisation telle que décrite dans la revendication 1 ou 2, dans laquelle :
la plante est une plante herbacée.

4. Utilisation telle que décrite dans l'une des revendications 1 à 3, dans laquelle :
la plante est un plant de la plante.

5. Utilisation telle que décrite dans l'une des revendications 1 à 4, dans laquelle :
la plante est cultivée dans un espace fermé.

6. Méthode de lutte contre les thrips, comprenant l'étape suivante :
traiter une plante avec un agent de lutte contre les thrips selon l'une des revendications 1 à 5, cette plante étant cultivée et appartenant à la famille des Brassicaceae, à la famille des Solanaceae, à la famille des Rosaceae, à la famille des Cucurbitaceae, à la famille des Fabaceae ou à la famille des Asteraceae.

7. Méthode telle que décrite dans la revendication 6, dans laquelle :
la plante est traitée avec l'agent de lutte contre les thrips au moins 4 fois à des intervalles de 5 jours à 7 jours au cours de l'étape de traitement de la plante avec l'agent de lutte contre les thrips.

8. Méthode telle que décrite dans la revendication 6 ou 7, dans laquelle :
la plante est traitée avec l'agent de lutte contre les thrips dans les 7 jours suivant le début du développement d'une nouvelle feuille, au cours de l'étape de traitement de la plante avec l'agent de lutte contre les thrips.

9. Méthode telle que décrite dans l'une des revendications 6 à 8, dans laquelle :
le traitement comprend la pulvérisation de l'agent de lutte contre les thrips.
